# EUROPÄISCHE PATENTSCHRIFT

(11) **EP 3 770 574 B1**
(45) Veröffentlichungstag und Bekanntmachung des Hinweises auf die Patenterteilung: **15.06.2022**
(21) Anmeldenummer: 19187544.2
(22) Anmeldetag: 22.07.2019
(51) Int. Cl.: G01M 7/02, G01M 99/00, G01N 3/04

(54) **PRÜFSTAND UND VERFAHREN ZUM BETRIEB EINES SOLCHEN PRÜFSTANDS**
TEST BENCH AND METHOD FOR OPERATING SUCH A TEST BENCH
BANC D'ESSAI ET PROCÉDÉ DE FONCTIONNEMENT D'UN TEL BANC D'ESSAI

(43) Veröffentlichungstag der Anmeldung: 27.01.2021
(73) Patentinhaber: Realtest GmbH, 89143 Blaubeuren OT Seissen (DE)
(72) Erfinder: Tobuschat, Armin, Dr.-Ing., 89134 Blaustein OT Seißen (DE); Tobuschat, Marc, 89134 Blaustein OT Seißen (DE)
(74) Vertreter: Baur & Weber Patentanwälte PartG mbB

(56) Entgegenhaltungen:
- CN-A- 107 515 090
- DE-A1- 2 715 918

## Beschreibung

Die Erfindung betrifft einen Prüfstand und ein Verfahren zum Betrieb eines solchen Prüfstands, insbesondere zur Bestimmung einer mechanischen Belastung.

Aus dem allgemeinen Stand der Technik sind Prüfstände bekannt, auf denen Bauteile mittels entsprechender Anregungsvorrichtungen bezüglich ihres Belastungsverhaltens untersucht werden können. Derartige Vorrichtungen haben sich insbesondere bei der Bemessung von Bauteilen bewährt, die zwar auf Grundlage von Festigkeitsberechnungen vorabdimensioniert werden können, was jedoch mit Unsicherheiten behaftet sein kann. Insbesondere bei dynamisch beanspruchten Bauteilen sind die Beanspruchungen bezüglich ihrer Größe, ihrer statistischen Verteilung sowie ihrer Wirkrichtung typischerweise nicht genau bekannt. Für Betriebsfestigkeitsversuche haben sich daher derartige Prüfstände bewährt, wobei neben einachsigen auch mehrachsige Krafteinleitungen in Form von Anregungen bekannt sind. Insbesondere in der Fahrzeugtechnik werden derartige Aufbauten, beispielsweise mit bis zu sieben Achsen, verwendet, um mechanische Beanspruchungen überprüfen zu können.

Um das Belastungsverhalten über einen längeren Zeitraum überprüfen zu können, ist es daher notwendig, den Prüfstand zusammen mit dem Prüfling über einen ausgedehnten Zeitraum zu benutzen. Während bei rein mechanischen Bauteilen ein Langzeitbetrieb typischerweise unproblematisch ist, kann im Zuge der angestrebten Elektrifizierung in der Fahrzeugtechnik eine zusätzliche Gefahrenquelle durch den gleichzeitigen Betrieb, beispielsweise eines Lithium-Akkumulators oder auch einer Brennstoffzelle während der Untersuchung auf dem Prüfstand ergeben. Insbesondere die Möglichkeit eines Batteriebrandes oder dergleichen erfordert daher eine kontinuierliche Überwachung des Prüfstandes, was zusätzliche Investitionen in entsprechende Sicherheitssysteme oder auch einen erhöhten Personalaufwand bedeutet.

Insbesondere für die Bekämpfung von Bränden sind bereits mehrere Lösungen vorgeschlagen worden.

So ist in der DE 10 2017 216 210 A1 eine Brandlöschanlage für einen Prüfstand für Fahrzeuge beschrieben worden, die zumindest mit einem Prüfbereich, einem Fixierungselement zum Festhalten des Fahrzeugs im Prüfbereich und einer Brandmeldeanlage ausgestattet ist. Eine erhöhte Brandsicherheit kann dadurch erreicht werden, dass das Fixierelement im Brandfall geöffnet werden kann und dass ein Linearantrieb am Prüfstand angeordnet ist, um das Fahrzeug aus dem Prüfbereich in einen Löschbereich zu bewegen.

Aus der DE 10 2019 101 306 A1 ist eine Klimakammer zur Aufnahme einer zu prüfenden Batterieeinheit und zur Konditionierung der Betriebsumgebungsluft der Batterieeinheit bekannt. Die Batterieeinheit umfasst eine Mehrzahl an Batteriezellen und ein Batteriemanagementsystem, wobei die Klimakammer als eine einzeln transportierbare Klimabox ausgebildet ist.

Aus der WO 2011/015613 A2 ist eine Schutzvorrichtung für eine Testanlage bekannt, wobei die Testanlage zum Testen von im Schadensfall Schadgase emittierenden Objekten dient und wobei die Testanlage eine zumindest im Wesentlichen geschlossene Prüfkammer und eine erste Absaugeinrichtung für die Prüfkammer aufweist, die über einen Durchgangsbereich mit der Prüfkammer verbunden ist, sowie mit einem Türelement, das die Prüfkammer mit der Umgebung verbindet. Demnach ist es vorgesehen, dass die Prüfkammer von einem Schutzgehäuse umgeben ist und dass das Schutzgehäuse eine zweite Absaugeinrichtung aufweist.

Die CN 107 515 090 A zeigt eine Vibrationsprüfvorrichtung für ein Batteriesystem. Die Vibrationsprüfvorrichtung umfasst eine Bodenplatte und Stützsäulen, wobei die Bodenplatte eine Vielzahl von Befestigungslöchern für das Batteriesystem umfasst. Die Stützsäulen sind auf der Bodenplatte angeordnet und werden zum Stützen des Batteriesystems und zum Befestigen des Batteriesystems auf der Bodenplatte verwendet, und die Positionen der Stützsäulen sind mit den Positionen der Befestigungslöcher für das Batteriesystem abgestimmt. Die Vibrationsprüfvorrichtung ist einfach in der Struktur und bequem zu montieren und zu demontieren.

Die DE 27 15 918 zeigt eine Vorrichtung für die regelbare Verriegelung eines beweglichen Teils gegenüber einem festen Bauteil oder einem festen Gestell. Die Vorrichtung dient zur regelbaren Verrieglung eines beweglichen Teils gegenüber einem festen Bauteil oder Gestell oder Rahmen, z.B. um einen Abstreicher in einer Fließbandarbeitseinrichtung oder einer Arbeitseinrichtung mit Förderband festzuhalten, indem der Abstreicher zwischen einer Winkelschiene oder einem ähnlichen Teil sowie dem festen Gestellteil der Einrichtung festgeklemmt wird.

Ausgehend von diesem Stand der Technik ist es Aufgabe der Erfindung, einen Prüfstand oder ein Verfahren zum Betreib eines solchen Prüfstands zu schaffen, der auf einfache Weise auch mit potenziell Gefahrensituationen bedingenden Prüflingen verwendet werden kann.

Diese Aufgabe wird durch die Merkmale der unabhängigen Patentansprüche gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Prüfstand, insbesondere zur Bestimmung einer mechanischen Belastung, angegeben, der eine Anregungsvorrichtung und einen eine elektrische Speichereinheit aufweisenden Prüfling umfasst, der über wenigstens eine Spannvorrichtung mit der Anregungsvorrichtung verbunden ist, wobei die Spannvorrichtung eine lösbare Verbindung zwischen einer mit der Anregungsvorrichtung verbundenen ersten Halteschiene und einer mit dem Prüfling verbundenen zweiten Halteschiene schafft, indem ein bezüglich der ersten Halteschiene drehbarer Hebel, der mit einem Aktuator gekoppelt ist, die zweite Halteschiene mit einer Haltekraft in Richtung der ersten Halteschiene beaufschlagt, so dass zweite Halteschiene formschlüssig auf der ersten Halteschiene aufliegt und nach Wegfall der Haltekraft von der ersten Halteschiene lösbar ist, um den Prüfling von der Anregungsvorrichtung zu trennen.

Demnach wird der Prüfstand erfindungsgemäß mit einer Spannvorrichtung versehen, die während des Betriebs für ein formschlüssiges Aufliegen des Prüflings durch Beaufschlagung mit einer Haltekraft sorgt und die aber dennoch ein Lösen des Prüflings ermöglicht, sodass zur Trennung von der Anregungsvorrichtung lediglich die Haltekraft wegfallen muss. Die Bestimmung des Belastungsverhaltens während des Betriebs des Prüfstands wird daher erfindungsgemäß nicht beeinflusst, es ist jedoch möglich, im Gefahrenfall den Prüfling auf einfache und schnelle Weise von der Anregungsvorrichtung zu trennen, um eine Gefährdung des Bedienpersonals oder Schaden an anderen Einrichtungen in der Nähe des Prüfstands verringern oder ausschließen zu können.

Gemäß einer Ausführungsform der Erfindung sind jeweils ein Paar erster Halteschienen und ein Paar zweiter Halteschienen an gegenüberliegenden Längsseiten des Prüflings angebracht, wobei für jedes Paar von Halteschienen oder an jedem Ende einer Halteschiene eine Spannvorrichtung vorgesehen ist.

Gemäß dieser Vorgehensweise wird eine zuverlässige Befestigung des Prüflings auf der Anregungsvorrichtung geschaffen, wobei die Spannvorrichtung an unterschiedlichen Stellen entlang der Halteschiene angeordnet sein kann. Die Zahl bzw. die Position der Spannvorrichtungen kann der Form des Prüflings angepasst werden, wobei typischerweise jeweils am Ende einer Halteschiene eine entsprechende Spannvorrichtung vorgesehen sein kann.

Gemäß einer weiteren Ausführungsform der Erfindung ist zwischen der ersten Halteschiene und der zweiten Halteschiene ein mit einer Öffnung korrespondierender Vorsprung vorgesehen ist, der eine Relativbewegung zwischen der ersten Halteschiene und der zweiten Halteschiene in einer Richtung seitlich zur Haltekraft verhindert.

Die Beaufschlagung der Halteschienen mit einer Haltekraft ermöglicht zwar die kraftschlüssige Verbindung der beiden Bauteile, eine Relativbewegung seitlich zur Haltekraft wird jedoch zusätzlich dadurch verhindert, dass ein Vorsprung in eine korrespondierende Öffnung eingreifen kann. Hierzu beispielsweise ein Passstift in eine entsprechende Bohrung eingeführt werden, sodass über den Kraftschluss hinaus auch ein Formschluss zwischen den beiden Halteschienen möglich ist.

Der Hebel ist mit dem Aktuator, der insbesondere hydraulisch oder pneumatisch steuerbar ist, gekoppelt.

Zur Aktivierung der Haltekraft wird ein entsprechend steuerbarer Aktuator eingesetzt, der sowohl automatisch als auch vom Bedienpersonal aktiviert werden kann. Aufgrund dieser Vorgehensweise ist eine zuverlässige Befestigung während des Regelbetriebs möglich, die Verwendung eines hydraulischen oder pneumatischen Aktuators schafft jedoch auch ein schnelles Trennen des Prüflings von der Anregungsvorrichtung.

Gemäß einer weiteren Ausführungsform der Erfindung ist der Hebel über ein Drehgelenk mit einer Koppelstange des Aktuators verbunden.

Diese Vorgehensweise ermöglicht eine einfache Ankopplung des Aktuators an den Prüfling bzw. die Anregungsvorrichtung.

Gemäß einer weiteren Ausführungsform der Erfindung weist die Spannvorrichtung eine erste Drehachse an der ersten Halteschiene und eine zweite Drehachse an dem Hebel auf, die mit einem Zwischenstück verbunden sind, um den Hebel relativ zur zweiten Halteschiene zu verschwenken.

Demnach kann die Verschwenkung des Hebels relativ zur zweiten Halteschiene auf einfache Weise durchgeführt werden, wobei die Krafteinleitung über den

Hebel nicht notwendigerweise senkrecht erfolgen muss, sodass die erfindungsgemäße Spannvorrichtung an unterschiedliche Platzerfordernisse angepasst werden kann.

Gemäß einer weiteren Ausführungsform der Erfindung weist die Spannvorrichtung am zur zweiten Halteschiene zugewandten Ende des Hebels einen verstellbaren Abstandshalter auf.

Diese Vorgehensweise ermöglicht eine einfache Anpassung sowohl bezüglich Toleranzen bei der Herstellung des Prüflings als auch beim Wechsel auf unterschiedliche Prüflinge.

Gemäß einer weiteren Ausführungsform der Erfindung ist der Hebel der Spannvorrichtung so bewegbar, dass der Prüfling entlang einer Längsrichtung der zweiten Halteschiene entnehmbar ist.

Die Spannvorrichtung kann folglich so verschwenkt werden, dass der Prüfling direkt nach oben, d. h. entlang der Längsrichtung der Halteschiene entnommen werden kann. Dies erleichtert das ab nehmen des Prüflings von der Anregungsvorrichtung im Gefahrenfall.

Gemäß einer weiteren Ausführungsform der Erfindung umfasst der Prüfling ein Fahrzeugdach mit einem aufladbaren Akkumulator.

Insbesondere bei der Verwendung von Batterien für Elektrofahrzeuge kann der mechanische Aufbau anhand des erfindungsgemäßen Prüfstands bezüglich seines Belastungsverhaltens getestet werden, wobei im Gefahrenfall durch defekte Batterien ausgelöste Brände nicht im Bereich des Prüfstands gelöscht werden müssen.

Gemäß einer weiteren Ausführungsform der Erfindung ist der Prüfling mittels der Anregungsvorrichtung in eine oder mehrere Richtungen zur Belastungssimulation bewegbar.

Um aussagekräftige Messungen zum Belastungsverhalten von Bauteilen vornehmen zu können, ist oftmals eine Anregung in unterschiedliche Richtungen notwendig, wofür die Erfindung ebenfalls einsetzbar ist.

Gemäß der Erfindung wird auch ein Verfahren zum Betrieb eines Prüfstands, wie oben beschrieben, angegeben, bei dem der Prüfling zunächst auf die Anregungsvorrichtung gesetzt wird, die Spannvorrichtung so betätigt wird, dass der Prüfling auf der Anregungsvorrichtung fest aufliegt, anschließend ein Belastungstest gestartet wird, wobei im Gefahrenfall die Spannvorrichtung so betätigt wird, dass der Prüfling von der Anregungsvorrichtung gelöst werden kann.

Gemäß einer Ausführungsform des erfindungsgemäßen Verfahrens wird der Gefahrenfall mittels eines Brandmelders eingeleitet.

Gemäß einer weiteren Ausführungsform des erfindungsgemäßen Verfahrens stellt der Gefahrenfall ein Brand der elektrischen Speichereinheit dar.

Gemäß einer weiteren Ausführungsform des erfindungsgemäßen Verfahrens kann der Prüfling nach Lösen von der Anregungsvorrichtung weg transportiert werden, wobei vorzugsweise ein Kran oder ein Hubstapler verwendet wird.

Nachfolgend werden einige Ausführungsbeispiele anhand der Zeichnung näher erläutert. Es zeigen:
- Figur 1: in einer perspektivischen Seitenansicht einen Prüfstand gemäß der Erfindung,
- Figur 2A: ein Detail aus dem Prüfstand gemäß Figur 1 in einer ersten Seitenansicht,
- Figur 2B: ein weiteres Detail aus dem Prüfstand gemäß Figur 1 in einer weiteren Seitenansicht,
- Figur 3: eine Detailansicht des Prüfstands aus Figur 1 gemäß einer perspektivischen Seitenansicht.

In den Figuren sind gleiche oder funktional gleich wirkende Bauteile mit den gleichen Bezugszeichen versehen.

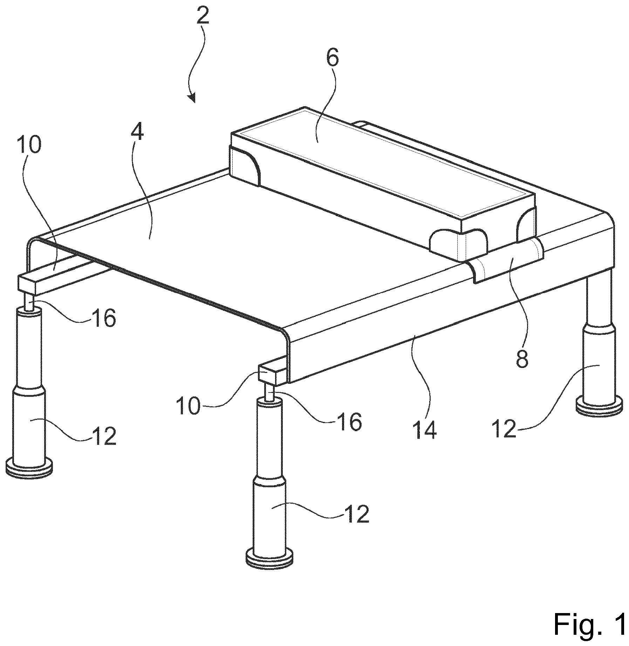

In Figur 1 ist eine perspektivische Seitenansicht eines Prüfstands 2 gezeigt, der einen Prüfling 4 aufweist, auf den eine in Form einer aufladbaren Batterie ausgeführte elektrische Speichereinheit 6 befestigt ist. Die Befestigung der elektrischen Speichereinheit 6 erfolgt beispielsweise über Halterungen 8, die eine Verbindung zum Prüfling 4 herstellen. Beim Prüfling 4 handelt es sich beispielsweise um ein Fahrzeugdach, das für ein elektrisch betriebenes Fahrzeug, wie z. B. ein Omnibus sein kann. Der Prüfling 4 weist beispielsweise zwei parallele Längsträger 10 auf, die mit mehreren in Form von Hydraulikzylindern ausgebildeten Anregungsvorrichtungen 12 verbunden sind, wozu beispielsweise auf der Unterseite 14 mehrere Verbindungsstücke 16 vorgesehen sind.

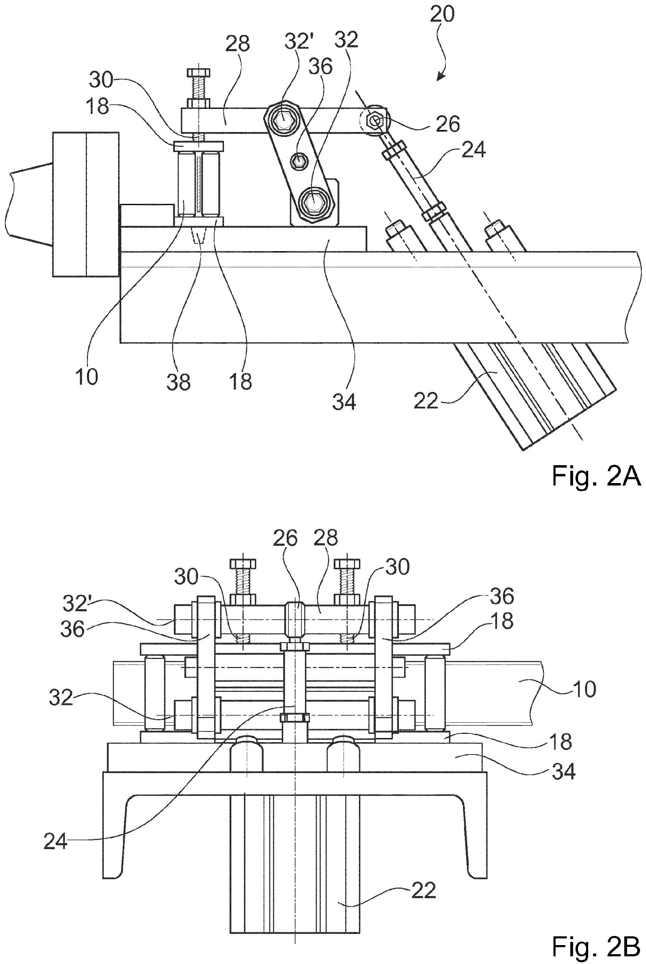

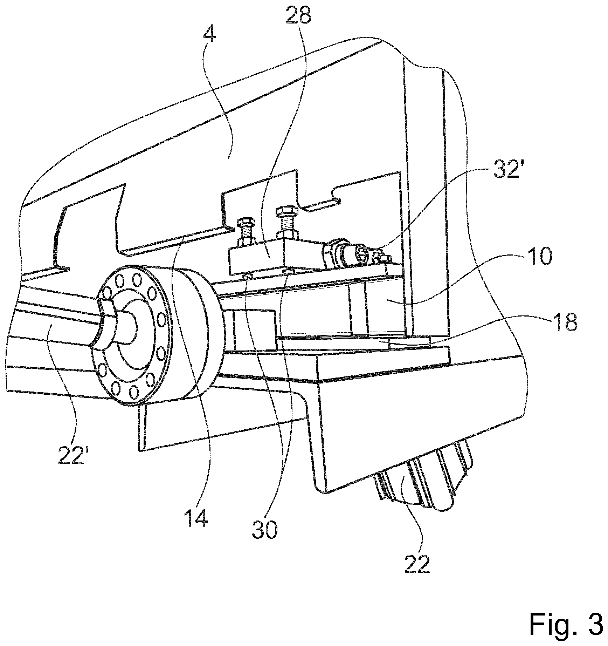

Der Prüfstand 2 gemäß Figur 1 kann noch um weitere Anregungsvorrichtungen erweitert werden, um ein Belastungsverhalten des Prüflings 4 in unterschiedlichen Anregungsrichtungen überprüfen zu können. Bei einer derartigen Vorrichtung ist es jedoch nachteilhaft, dass beim Betrieb der elektrischen Speichereinheit 6 eventuell auftretende Kurzschlüsse zu Bränden führen können, die zur Zerstörung des Prüfstands 2 sowie zur Gefährdung der dort anwesenden Personen führen kann. Erfindungsgemäß wird der Prüfstand 2 gemäß Figur 1 daher mit einer Spannvorrichtung versehen, die ein schnelles Trennen des Prüflings 4 nebst elektrischer Speichereinheit 6 von der Anregungsvorrichtung 12 ermöglicht. Ausgestaltungen der Spannvorrichtung werden nachfolgend unter Bezugnahme auf die Figuren 2 und 3 erläutert.

Figur 2A zeigt eine Ausgestaltung der Spannvorrichtung 20, bei der Längsträger 10 durch eine erste Halteschiene 34 und einer zweiten Halteschiene 18 ergänzt wurde, wobei die zweite Halteschiene 18 in Form eines Ober- bzw. Untergurtes um den Längsträger 10 angeordnet ist. Die erste Halteschiene 34 ist fest mit der Anregungsvorrichtung 12 verbunden, während die Kombination aus zweiter Halteschiene 18 und erstem Längsträger 10 Bestandteil des Prüflings 4 sind. Um nun den Prüfling 4 von der ersten Halteschiene 34 trennen zu können, ist ein Aktuator 22 vorgesehen, der über eine Koppelstange 24 einen bezüglich eines Drehgelenks 26 beweglichen Hebel 28 betätigen kann, an dessen vom Drehgelenk 26 gegenüberliegenden Ende ein Abstandshalter 30 eine Haltekraft auf die zweite Halteschiene 18 ausüben kann. Dazu sind an der ersten Halteschiene 34 eine erste Drehachse 32 und eine weitere Drehachse 32' am Hebel 28 vorgesehen, so dass ein Zwischenstück 36 zwischen Hebel 28 und erster Haltschiene 34 bei Betätigung des Aktuators 22 eine entsprechende Haltekraft ausüben kann. Auf der Unterseite des als Untergurt ausgebildeten Teils der zweiten Halteschiene 18 ist ein Vorsprung 38 ausgebildet, der in eine entsprechende Einsenkung der ersten Halteschiene 34 eingreifen kann, so dass senkrecht zur Haltekraft keine Bewegung der zweiten Halteschiene 18 relativ zur ersten Halteschiene 34 möglich ist.

Der Aktuator 22 ermöglicht somit sowohl das Festhalten des Prüflings auf der ersten Halteschiene 34 durch Schließen des Hebels 28 als auch die Freigabe des Prüflings 4 bei geöffnetem Hebel 28. Im Falle eines Brandes oder dergleichen kann somit vorzugsweise durch hydraulische oder pneumatische Betätigung des Aktuators 22 ein schnelles Öffnen des Hebels 28 erreicht werden, so dass die zweite Halteschiene 18 nebst Längsträger 10 frei liegt, um den Prüfling 4 nach oben beispielsweise mittels eines Hubstaplers abheben zu können und einem Ort zu überführen, der für eine Brandbekämpfung ausgestattet ist. Hierbei kann es sich beispielsweise um eine speziell eingerichtete Kammer innerhalb einer Montagehalle aber auch um einen Platz außerhalb der Montagehalle handeln. Der Aktuator 22 kann zum schnellen Öffnen des Hebels 28 mit einem Steuersignal, das beispielsweise aus einer Brandmeldeanlage oder von einem Bediener durch Aktivieren eines Notschalters stammt, betätigt werden.

In Figur 2B ist die Spannvorrichtung 20 nochmals in einer Ansicht seitlich auf den Längsträger 10 gezeigt. Man erkennt, dass die Spannvorrichtung 20 typischerweise zwei parallele Zwischenstücke 36 aufweist, die mittels der ersten Drehachse 32 und der zweiten Drehachse 32' verbunden sind, wobei die Drehachsen 32 und 32' beispielsweise in Form eines Bolzens oder dergleichen ausgebildet sein können. Der Hebel 28 kann von der Koppelstange 24 drehbar bewegt werden, wobei das Drehgelenk 26 die zweite Drehachse 32' umgibt. Vorzugsweise ist der Abstandshalter 30 verstellbar ausgeführt, wobei hier, wie in Figur 2B gezeigt ist, auch mehrere Abstandshalter 30 eingesetzt werden können, die beispielsweise in Form einer Schraube mit entsprechender Sicherungsmutter verstellbar am Hebel 28 angebracht sein können.

In Figur 3 ist die Spannvorrichtung nochmals in einer perspektivischen Seitenansicht gezeigt, wobei hier die Zuordnung des Prüflings 4 zur zweiten Halteschiene 18 bzw. Längsträger 10 deutlich zu erkennen ist. Man erkennt, dass die Spannvorrichtung unterhalb der Unterkante 14 des Prüflings 4 angeordnet ist, wobei dies vorzugsweise an allen vier Ecken des Prüflings 4 vorgenommen wird.

Desweiteren ist in Figur 3 zu erkennen, dass eine weitere Anregungsvorrichtung 12' den in Figur 1 gezeigten Prüfstand 2 um eine weitere Achse erweitern kann. Somit ist es möglich, den Prüfstand 2 beispielsweise mit bis zu sieben Anregungsachsen zu betreiben.

Neben einem Prüfstand 2 stellt die Erfindung auch auf vorteilhafte Weise ein Verfahren zum Betrieb eines solchen Prüfstands 2 bereit, wobei bei einem erfindungsgemäßen Verfahren nach Detektion eines Gefahrenfalls ein zunächst mit einer Haltekraft beaufschlagter Prüfling 4 von der ersten Halteschiene 34 gelöst werden kann, indem der Aktuator 22 die zweite Halteschiene 18 freigibt. Anschließend wird der Prüfling 4 von der Anregungsvorrichtung 12 getrennt und kann an einen sicheren Ort zur Brandbekämpfung verbracht werden. Die Erfindung stellt somit auf einfache Weise sicher, dass beim Testen von Belastungsverhalten elektrischer Speicherkomponenten durch mechanische Anregungen eine Gefährdung des Bedienpersonals vermieden werden kann bzw. die verwendeten Messgeräte und Messeinrichtungen vor Schäden bewahrt werden können.

## Patentansprüche

1. Prüfstand, insbesondere zur Bestimmung einer mechanischen Belastung, der eine Anregungsvorrichtung (12) und einen eine elektrische Speichereinheit (6) aufweisenden Prüfling (4) umfasst, der über wenigstens eine Spannvorrichtung (20) mit der Anregungsvorrichtung (12) verbunden ist, wobei die Spannvorrichtung (20) eine lösbare Verbindung zwischen einer mit der Anregungsvorrichtung (12) verbundenen ersten Halteschiene (34) und einer mit dem Prüfling (4) verbundenen zweiten Halteschiene (18) schafft,
**dadurch gekennzeichnet, dass** die lösbare Verbindung geschaffen wird, indem ein bezüglich der ersten Halteschiene (34) drehbarer Hebel (28), der mit einem Aktuator (22) gekoppelt ist, die zweite Halteschiene (18) mit einer Haltekraft in Richtung der ersten Halteschiene (34) beaufschlagt, so dass die zweite Halteschiene (18) formschlüssig auf der ersten Halteschiene (34) aufliegt und nach Wegfall der Haltekraft von der ersten Halteschiene (34) lösbar ist, um den Prüfling (4) von der Anregungsvorrichtung (12) zu trennen.

2. Prüfstand nach Anspruch 1, bei dem jeweils ein Paar erster Halteschienen (34) und ein Paar zweiter Halteschienen (18) an gegenüberliegenden Längsseiten des Prüflings (4) angebracht sind, wobei für jedes Paar von Halteschienen oder an jedem Ende einer Halteschiene eine Spannvorrichtung (20) vorgesehen ist.

3. Prüfstand nach Anspruch 1 oder 2, bei dem zwischen der ersten Halteschiene (34) und der zweiten Halteschiene (18) ein mit einer Öffnung korrespondierender Vorsprung (38) vorgesehen ist, der eine Relativbewegung zwischen der ersten Halteschiene (34) und der zweiten Halteschiene (18) in einer Richtung seitlich zur Haltekraft verhindert.

4. Prüfstand nach einem der Ansprüche 1 bis 3, bei dem der Hebel (28) hydraulisch oder pneumatisch steuerbar ist.

5. Prüfstand nach Anspruch 4, bei dem der Hebel (28) über ein Drehgelenk (26) mit einer Koppelstange (24) des Aktuators (22) verbunden ist.

6. Prüfstand nach einem der Ansprüche 1 bis 5, bei dem die Spannvorrichtung (20) eine erste Drehachse (32) an der ersten Halteschiene (34) und eine zweite Drehachse (32') an dem Hebel (28) aufweist, die mit einem Zwischenstück (36) verbunden sind, um den Hebel (28) relativ zur zweiten Halteschiene (18) zu verschwenken.

7. Prüfstand nach einem der Ansprüche 1 bis 6, bei dem die Spannvorrichtung (20) am zur zweiten Halteschiene (18) zugewandten Ende des Hebels (28) einen verstellbaren Abstandshalter (30) aufweist.

8. Prüfstand nach einem der Ansprüche 1 bis 7, bei dem der Hebel (28) der Spannvorrichtung (20) so bewegbar ist, dass der Prüfling (4) entlang einer Längsrichtung der zweiten Halteschiene (18) entnehmbar ist.

9. Prüfstand nach einem der Ansprüche 1 bis 8, bei dem der Prüfling (4) ein Fahrzeugdach mit einem aufladbaren Akkumulator umfasst.

10. Prüfstand nach einem der Ansprüche 1 bis 9, bei dem der Prüfling (4) mittels der Anregungsvorrichtung (12) in eine oder mehrere Richtungen zur Belastungssimulation bewegbar ist.

11. Verfahren zum Betrieb eines Prüfstands nach einem der Ansprüche 1 bis 10, bei dem der Prüfling (4) zunächst auf die Anregungsvorrichtung (12) gesetzt wird, die Spannvorrichtung (20) so betätigt wird, dass der Prüfling (4) auf der Anregungsvorrichtung (12) fest aufliegt, anschließend ein Belastungstest gestartet wird, wobei im Gefahrenfall die Spannvorrichtung (20) so betätigt wird, dass der Prüfling (4) von der Anregungsvorrichtung (12) gelöst werden kann.

12. Verfahren nach Anspruch 11, bei dem der Gefahrenfall mittels eines Brandmelders eingeleitet wird.

13. Verfahren nach Anspruch 11 oder 12, bei dem der Gefahrenfall ein Brand der elektrischen Speichereinheit (6) darstellt.

14. Verfahren nach einem der Ansprüche 11 bis 13, bei dem der Prüfling (4) nach Lösen von der Anregungsvorrichtung (12) transportiert werden kann, wobei vorzugsweise ein Kran oder ein Hubstapler verwendet wird.

15. Verfahren nach einem der Ansprüche 11 bis 14, bei dem zum Lösen des Prüflings (4) von der Anregungsvorrichtung (12) die Spannvorrichtung (20) von einem Steuersignal betätigt wird.

## Claims

1. Test bench, in particular for determining a mechanical load, which comprises an excitation device (12) and a test object (4) which has an electrical storage unit (6) and is connected to the excitation device (12) by means of at least one clamping device (20), the clamping device (20) establishing a releasable connection between a first holding rail (34) connected to the excitation device (12) and a second holding rail (18) connected to the test object (4),
**characterized in that** the releasable connection is established by a lever (28) which can be rotated with respect to the first holding rail (34) and is coupled to an actuator (22) applying a holding force to the second holding rail (18) in the direction of the first holding rail (34) such that the second holding rail (18) form-fittingly rests on the first holding rail (34) and can be released from the first holding rail (34) after the holding force is removed in order to separate the test object (4) from the excitation device (12).

2. Test bench according to claim 1, wherein a pair of first holding rails (34) and a pair of second holding rails (18) are attached to opposite longitudinal sides of the test object (4), wherein one clamping device (20) is provided for each pair of holding rails or on each end of one holding rail.

3. Test bench according to either claim 1 or claim 2, wherein a projection (38) corresponding to an opening is provided between the first holding rail (34) and the second holding rail (18), which projection prevents relative movement between the first holding rail (34) and the second holding rail (18) in a direction lateral to the holding force.

4. Test bench according to any of claims 1 to 3, wherein the lever (28) can be controlled hydraulically or pneumatically.

5. Test bench according to claim 4, wherein the lever (28) is connected to a coupling rod (24) of the actuator (22) by means of a rotational joint (26).

6. Test bench according to any of claims 1 to 5, wherein the clamping device (20) has a first axis of rotation (32) on the first holding rail (34) and a second axis of rotation (32') on the lever (28), which first holding rail and lever are connected to an intermediate piece (36) in order for the lever (28) to pivot relative to the second holding rail (18).

7. Test bench according to any of claims 1 to 6, wherein the clamping device (20) has an adjustable spacer (30) at the end of the lever (28) that faces the second holding rail (18).

8. Test bench according to any of claims 1 to 7, wherein the lever (28) of the clamping device (20) can be moved in such a way that the test object (4) can be removed in a longitudinal direction of the second holding rail (18).

9. Test bench according to any of claims 1 to 8, wherein the test object (4) comprises a vehicle roof having a chargeable accumulator.

10. Test bench according to any of claims 1 to 9, wherein the test object (4) can be moved in one or more directions by means of the excitation device (12) for the purpose of load simulation.

11. Method for operating a test bench according to any of claims 1 to 10, wherein the test object (4) is first placed on the excitation device (12), the clamping device (20) is actuated in such a way that the test object (4) rests securely on the excitation device (12), and then a load test is started, wherein, in the event of an emergency, the clamping device (20) is actuated in such a way that the test object (4) can be released from the excitation device (12).

12. Method according to claim 11, wherein the emergency is initiated by means of a fire detector.

13. Method according to either claim 11 or claim 12, wherein the emergency is a fire in the electrical storage unit (6).

14. Method according to any of claims 11 to 13, wherein the test object (4) can be transported after it has been released from the excitation device (12), wherein a crane or a fork lift is preferably used.

15. Method according to any of claims 11 to 14, wherein, in order to release the test object (4) from the excitation device (12), the clamping device (20) is actuated by a control signal.

## Revendications

1. Banc d'essai, en particulier pour la détermination d'une charge mécanique, lequel comprend un dispositif d'excitation (12) et un élément à essayer (4) présentant une unité de stockage électrique (6) et étant relié au dispositif d'excitation (12) par l'intermédiaire d'au moins un dispositif de serrage (20), le dispositif de serrage (20) créant une liaison amovible entre un premier rail de maintien (34) relié au dispositif d'excitation (12) et un second rail de maintien (18) relié à l'élément à essayer (4),
**caractérisé en ce que** la liaison amovible est créée **en ce qu'**un levier (28) pouvant être tourné par rapport au premier rail de maintien (34) et couplé à un actionneur (22) déplace le second rail de maintien (18) avec une force de maintien en direction du premier rail de maintien (34), de sorte que le second rail de maintien (18) repose par complémentarité de forme sur le premier rail de maintien (34) et peut être détaché du premier rail de maintien (34) après une suppression de la force de maintien afin de séparer l'élément à essayer (4) du dispositif d'excitation (12).

2. Banc d'essai selon la revendication 1, dans lequel respectivement une paire de premiers rails de support (34) et une paire de seconds rails de support (18) sont fixées sur des côtés longitudinaux opposés de l'élément à essayer (4), un dispositif de serrage (20) étant prévu pour chaque paire de rails de maintien ou à chaque extrémité d'un rail de maintien.

3. Banc d'essai selon la revendication 1 ou 2, dans lequel une saillie (38) correspondant à une ouverture est prévue entre le premier rail de maintien (34) et le second rail de maintien (18), laquelle empêche un mouvement relatif entre le premier rail de maintien (34) et le second rail de maintien (18) dans une direction latérale à la force de maintien.

4. Banc d'essai selon l'une des revendications 1 à 3, dans lequel le levier (28) peut être commandé hydrauliquement ou pneumatiquement.

5. Banc d'essai selon la revendication 4, dans lequel le levier (28) est relié à une tige de couplage (24) de l'actionneur (22) par l'intermédiaire d'une articulation tournante (26).

6. Banc d'essai selon l'une des revendications 1 à 5, dans lequel le dispositif de serrage (20) présente un premier axe de rotation (32) sur le premier rail de maintien (34) et un second axe de rotation (32') sur le levier (28), lesquels sont reliés à une pièce intermédiaire (36) afin de faire pivoter le levier (28) par rapport au second rail de maintien (18).

7. Banc d'essai selon l'une des revendications 1 à 6, dans lequel le dispositif de serrage (20) présente une entretoise réglable (30) au niveau de l'extrémité du levier (28) tournée vers le second rail de maintien (18).

8. Banc d'essai selon l'une des revendications 1 à 7, dans lequel le levier (28) du dispositif de serrage (20) peut être déplacé de telle manière que l'élément à essayer (4) peut être retiré le long d'une direction longitudinale du second rail de maintien (18).

9. Banc d'essai selon l'une des revendications 1 à 8, dans lequel l'élément à essayer (4) comprend un toit de véhicule comportant un accumulateur rechargeable.

10. Banc d'essai selon l'une des revendications 1 à 9, dans lequel l'élément à essayer (4) peut être déplacé dans une ou plusieurs directions pour une simulation de chargement au moyen du dispositif d'excitation (12).

11. Procédé de fonctionnement d'un banc d'essai selon l'une des revendications 1 à 10, dans lequel l'élément à essayer (4) est d'abord posé sur le dispositif d'excitation (12), le dispositif de serrage (20) est actionné de manière à ce que l'élément à essayer (4) repose fermement sur le dispositif d'excitation (12), puis un test de charge est lancé, en cas de situation de danger, le dispositif de serrage (20) étant actionné de manière à ce que l'élément à essayer (4) peut être détaché du dispositif d'excitation (12).

12. Procédé selon la revendication 11, dans lequel la situation de danger est annoncée au moyen d'un détecteur d'incendie.

13. Procédé selon la revendication 11 ou 12, dans lequel la situation de danger est un incendie de l'unité de stockage électrique (6).

14. Procédé selon l'une des revendications 11 à 13, dans lequel l'élément à essayer (4) peut être transporté après avoir été détaché du dispositif d'excitation (12), de préférence en utilisant une grue ou un chariot élévateur.

15. Procédé selon l'une des revendications 11 à 14, dans lequel, pour détacher l'élément à essayer (4) du dispositif d'excitation (12), le dispositif de serrage (20) est actionné par un signal de commande.
